# EUROPEAN PATENT SPECIFICATION

(11) **EP 0 520 633 B1**
(45) Date of publication and mention of the grant of the patent: **14.08.1996**
(21) Application number: 92305111.4
(22) Date of filing: 04.06.1992
(51) Int. Cl.: F01L 9/02

(54) **Hydraulically operated valve control system for an internal combustion engine**
Hydraulisches Ventilsteuerung für Brennkraftmaschinen
Dispositif de commande hydraulique de soupapes pour moteurs à combustion interne

(30) Priority: 24.06.1991 US 720115
(43) Date of publication of application: 30.12.1992
(60) Divisional application: 94120028.9
(73) Proprietor: FORD MOTOR COMPANY LIMITED, Brentwood, Essex CM13 3BW (GB); FORD-WERKE AKTIENGESELLSCHAFT, D-50725 Köln (DE); FORD FRANCE S. A., F-92506 Rueil-Malmaison Cédex (FR)
(72) Inventor: Schechter, Michael Moses, Farmington Hills, Michigan 48331 (US)
(74) Representative: Messulam, Alec Moses

(56) References cited:
- EP-A- 0 420 443
- DE-A- 3 347 533
- FR-A- 2 585 765
- PATENT ABSTRACTS OF JAPAN vol. 12, no. 347 (M-743)(3194) 19 September 1988 & JP-A-63 109 213
- PATENT ABSTRACTS OF JAPAN vol. 14, no. 155 (M-954)(4098) 26 March 1990 & JP-A-21 6 310

## Description

This invention relates to systems for variably controlling internal combustion engine intake and exhaust valves. More specifically, it relates to engine valve systems of the type in which hydraulic pressure of a pressurised fluid is used through action of solenoid valves to control the engine valves motion.

The enhancement of engine performance to be attained by being able to vary the acceleration, velocity and travel time of the intake and exhaust valves in an engine is well known and appreciated in the art. However, the technology for providing a straight-forward, relatively inexpensive and highly reliable system has not been forthcoming. Increased use and reliance on micro electronic control systems for automotive vehicles and increased confidence in hydraulic as opposed to mechanical systems is now making substantial progress possible. In the area of intake and exhaust engine valves, prior development has been largely dependent upon sophisticated mechanical systems such as mechanically varying phase shift and other aspects of valve timing. Increased use of multiple valve engines has also been promoted.

The use or adoption of hydraulically controlled engine valves has been quite slow. Examples of known systems include those as shown in U.S. Patent Nos. 2,915,052; 3,240,191; 3,361,121; 3,534,718; 3,926,159; 3,963,006; and 4,200,067. In some instances, such as shown in U.S. Patent No. 3,361,121 the poppet valve is maintained in a closed position by a mechanical coil spring, yet utilises a hydraulic actuator to bias the valves in the open position. Several of the aforementioned patents also disclose the use of a rotary distributor valve to alternately couple the hydraulic actuator ports to a source of pressurised fluid, such as shown in U.S. Patent Nos. 2,915,052 and 4,200,067. In certain of the aforementioned patents, it is also shown that the hydraulic fluid system is used to both open and close the engine valve, such feature being shown in U.S. Patent Nos. 2,915,052 and 3,963,006.

However, none of the aforementioned systems provide a variable engine valve control system offering the simplicity, reliability, flexibility and efficiency believed necessary for use in the high production, high performance automotive engines being produced today and those that will be required in the near future.

FR-A-2585765 discloses a hydraulically operated valve control system for an internal combustion engine, said system comprising a high pressure source of fluid and a low pressure source of fluid; a cylinder head member adapted to be affixed to the engine and including an enclosed cavity; a poppet valve movable between a first and second position within said cylinder head member; a hydraulic actuator including a double acting piston coupled to the poppet valve and reciprocable within the enclosed cavity, the piston dividing the cavity into two working chambers of differing cross sectional area that vary in volume as the poppet valve moves; said cylinder head member having a high pressure port extending between the enclosed cavity and the high pressure source of fluid and a low pressure port extending between the enclosed cavity and the low pressure source of fluid; a high pressure valve and a low pressure valve for respectively regulating the flow of fluid in the high pressure and the low pressure ports; said high pressure source including a first high pressure fluid line leading to the enclosed cavity at both ends of the piston; said high pressure valve being located within said first high pressure line and operational to open and close fluid flow to one end of said piston; the other end of said piston being continuously open to said high pressure fluid source; a low pressure fluid line leading to the enclosed cavity at said one end of the piston, the low pressure valve being located within said low pressure line and operational to open and close fluid flow to the one end of the piston; and control means co-operating with the high and low pressure valves for selectively coupling the enclosed cavity to the high pressure and low pressure sources to oscillate the poppet valve in timed relation to engine operation.

In the above disclosure, the piston acting on the valve is a single acting piston which only serves to open the valve, a spring being relied upon to close the valve. Furthermore, the quantity of fluid that needs to be drawn from the high pressure pump corresponds to the full volume swept by the piston.

The present invention differs from the latter prior art publication in that in use high pressure fluid is returned to the high pressure source at the end of both the opening and closing of the poppet valve so that the volume of high pressure fluid passing through the enclosed cavity from the high pressure source to the low pressure source is substantially less that the volume of the cavity swept by the piston during its stroke.

In all its embodiments, the present invention includes a variable engine valve control system comprising a free moving valve with a piston attached to its top. The piston is subjected to fluid pressure acting on surfaces at both ends of the piston, with the surfaces being of unequal areas. The space at one end of the piston is connected to a source of high pressure fluid while the space at the other end can be connected either to a source of high pressure fluid or to a source of low pressure fluid, or disconnected from them both through action of controlling means such as solenoid valves.

Selective actuation and deactuation of the controlling means causes an inflow of pressurised fluid into a space at one end of said piston and an outflow of fluid from the space at the other end of the piston, such action leading to a change in the balance of forces acting on the piston and causing controlled motion of the valve from one fixed position to another.

The inflow of pressurised fluid is the result of fluid expansion from a pressurised container and the outflow of fluid leads to increased fluid compression in the pressurised container.

Moreover, the potential energy of pressurised fluid is converted into kinetic energy of the moving valve during acceleration, and the kinetic energy of the valve is converted back into potential energy of pressurised fluid during valve deceleration, thereby providing what can be referred to as a "liquid spring".

A result of using the kinetic energy of the valve to return fluid under high pressure to the high pressure source is that the net fluid flow between the high pressure and low pressure source during operation is significantly less than the volume swept by the piston motion.

The timing of the valve opening and closing motions is controlled by varying the timing of the controlling means actuation. The stroke of the valve is determined by the duration of the controlling means actuation and the acceleration, velocity and travel time of the valve can be controlled by varying the pressure of the pressurised fluid.

The general system of the present invention as described above may be applied to an engine with more than two valves per cylinder and capable of activating selectively one or several intake (or exhaust) valves simultaneously.

It may also be applied to an engine with single intake and exhaust valves per cylinder where one pair of solenoids, for respectively controlling the transmission of high and low pressure fluid, may be used to control the intake/ exhaust valves of a pair of cylinders 360° off cycle.

In one embodiment of the invention, the controlling means includes a rotary hydraulic distributor coupled with each solenoid valve, thereby permitting each solenoid valve to control operation of several free moving valves in succession.

The invention will now be described further, by way of example, with reference to the accompanying drawings, in which :
Figure 1 is a schematic diagram showing a single hydraulically controlled engine valve and the entire hydraulic system for supplying fluid to the valve controlling means according to the invention;
Figures 2a, 2b and 2c are elevation views showing a single engine valve and associated valve controlling means, with the valve being shown in three different stages of its being fully opened;
Figures 3a, 3b and 3c are elevation views showing a single engine valve and associated valve controlling means, with the valve being shown in three different stages of its being fully closed;
Figure 4 is a schematic diagram showing an alternative embodiment of the present invention wherein a single pair of control valves is used to control the operation of two valves associated with the same engine cylinder, thereby allowing the single engine valve to be functional or both valves to be functional through selective activation of the two control valves of the system;
Figure 5 is an alternate embodiment of the present invention and showing an elevation view of a engine valve and its control means utilising a single spring bias pressure relief valve and a double acting high pressure rail solenoid valve;
Figures 6 and 7 show as an elevation view and front view, respectively, a rotary hydraulic distributor in accordance with the present invention for distributing both high pressure and low pressure fluid to a plurality of engine valves;
Figures 8a, 8b and 8c are basically schematic representations of an engine valve being hydraulically opened using a modified hydraulic control system including the rotary distributor of Figures 6 and 7, all in accordance with the present invention;
Figures 9a, 9b and 9c show schematic representations of an engine valve being hydraulically closed using a modified hydraulic control system including the rotary distributor of Figures 6 and 7, all in accordance with the present invention;
Figure 10 is a schematic diagram of an alternative embodiment of the present invention wherein the control means including the rotary hydraulic distributor is used to control a plurality of engine valves, one each for each of the engine cylinders and all the other intake valves or exhaust valves;
Figures 11-13 are similar to Figure 10 but showing the engine valves at another point in the engine's cycle;

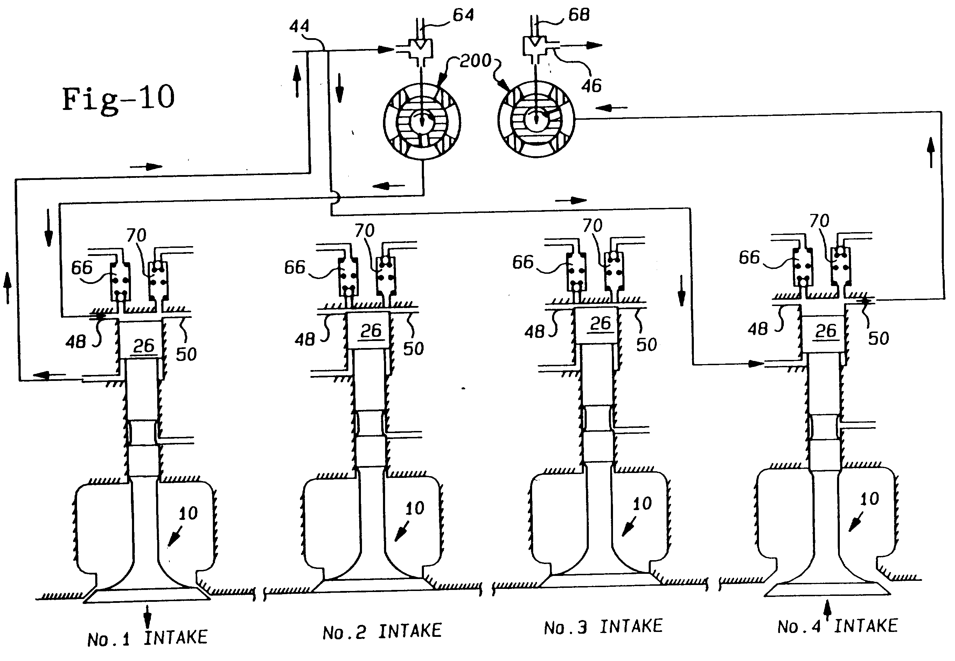

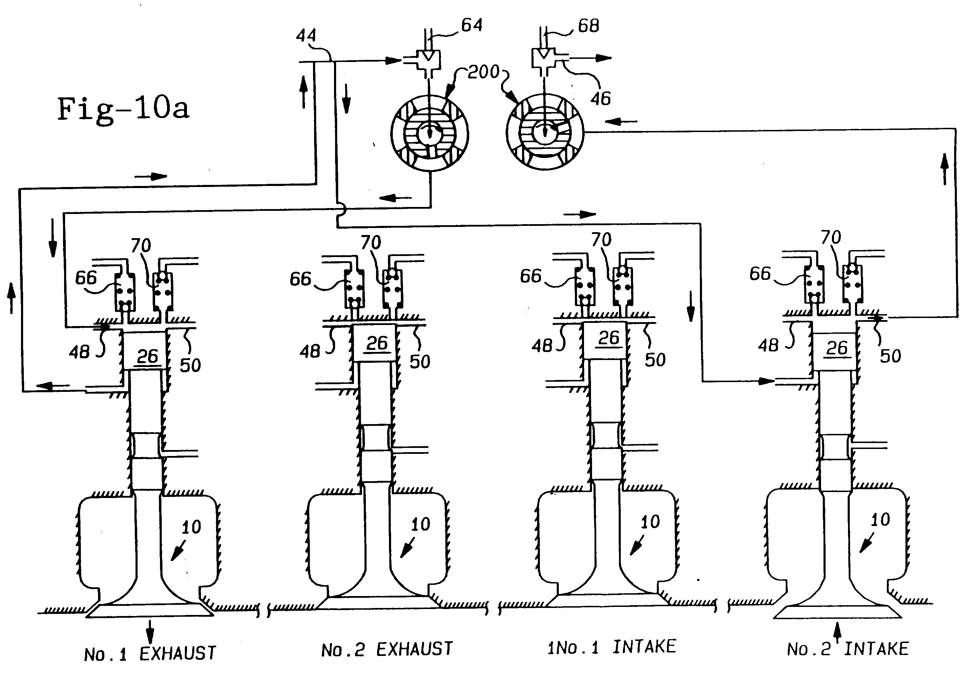

Figures 10a through 13a are schematic diagrams of yet another embodiment of the present invention wherein a pair of control valves including a hydraulic rotary distributor is used for controlling the valve operation of a pair of engine cylinders and wherein each distributor alternately controls the functions of both intake valves and exhaust valves, one each in each of the cylinders;

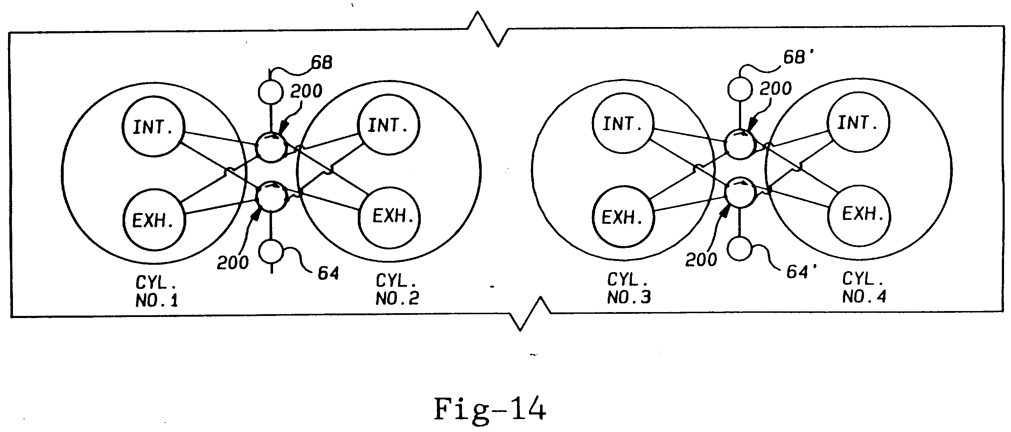

Figure 14 is a schematic representation of the engine valves and control valve system therefor of a pair of engine cylinders as shown in Figures 10a-13a.

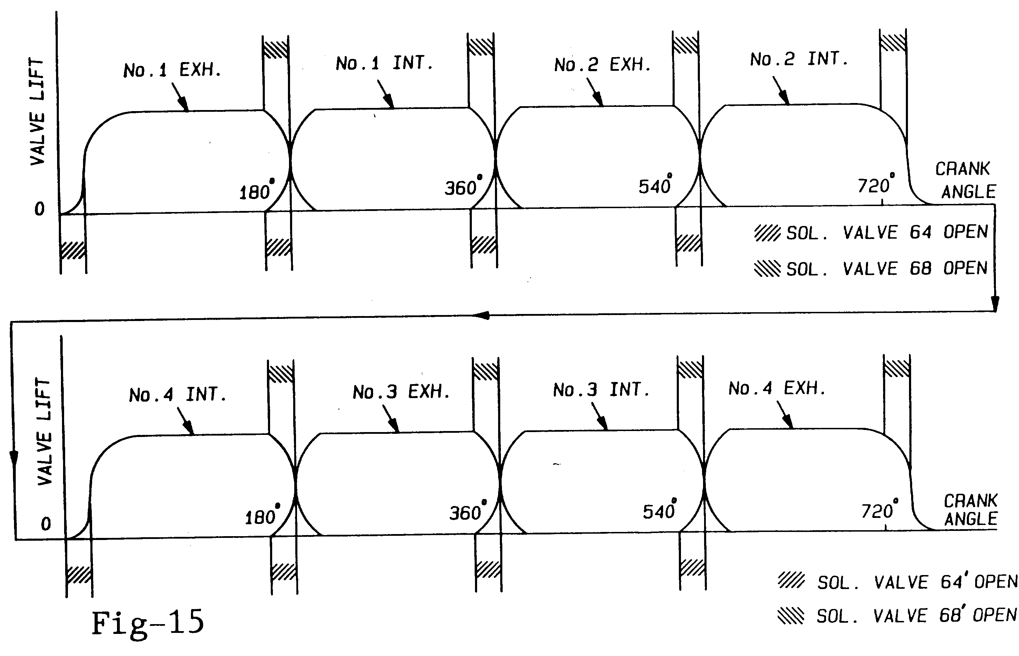

Figure 15 is a schematic valve lift diagram showing the valve lift pattern for the system shown in Figure 14;

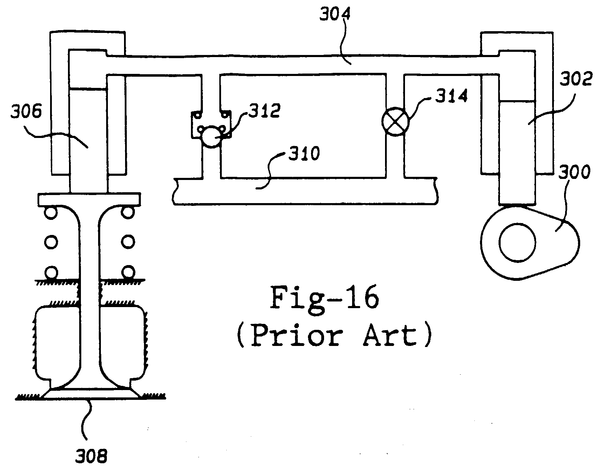

Figure 16 is a schematic diagram of a conventional lost motion type, cam-operated, hydraulic engine valve control system;

The present invention provides variable control of engine valve timing, lift and velocity. The system exploits elastic properties of compressed hydraulic fluid which, acting as a liquid spring, accelerates and decelerates the valve during its opening and closing motions. During acceleration, some of the potential energy of the fluid is converted into kinetic energy of the valve. During deceleration, the energy of the valve motion is returned to the fluid. With the exception of leakage, most of the energy of the fluid is conserved.

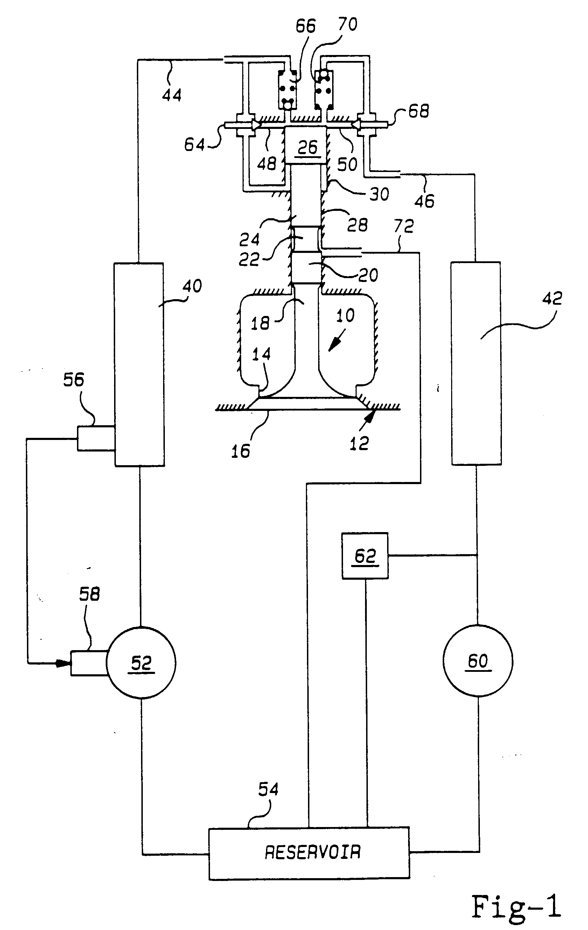

The basic features of the present invention are shown in Figure 1. An engine valve 10 is located within a cylinder head 12 which includes a port 14 for inlet air or exhaust, as the case may be. Valve 10 includes a valve head 16 and a stem portion 18. Valve stem portion 18 includes a series of concentric cylindrical sections 20, 22, 24 and 26 of varying outer diameter. The sections 20 and 24 guide the valve for reciprocation within guide bore 28. Section 26 constitutes a valve piston slidable within the limits of piston chamber 30 which is concentric with guide bore 28 and also constitutes a part of the cylinder head.

Fluid is selectively supplied to the piston 26 from a high pressure rail 40 and a low pressure rail 42 hydraulically connected through lines 44 and 46, respectively, to high pressure port 48 and low pressure port 50, respectively.

Hydraulic systems maintaining necessary fluid pressures in the high and low pressure rails can be arranged in a variety of ways. The arrangement as illustrated in Figure 1 includes a variable displacement pump 52 between a reservoir 54 and the high pressure rail. Since the fluid in the high pressure rail is subject only to expansion and contraction, the pumping work of the pump is largely limited to that necessary to compensate for internal leakage through clearances. The variable displacement pump 52 may be under automatic control whereby a pressure sensor 56 will produce a pressure feedback signal to a pump controller 58 in the event pressure in the high pressure rail drops below the set minimum required at any particular vehicle speed or other operating condition. This then varies the pump displacement to maintain the required pressure in the high pressure rail. Fluid in the low pressure rail 42 is maintained at a fixed low pressure by means of pressure pump 60 supplying fluid from reservoir 54 and pressure regulator 62.

The volume above the piston 26 can be connected to the high pressure rail through a solenoid valve 64 or a check valve 66, or to the low pressure rail through solenoid valve 68 or a check valve 70. The volume below the piston 26 is always connected to the high pressure rail. Fluid return line 72 completes the system and provides the means for returning to the reservoir 54 any fluid which leaks past the piston 26 at either end to the chamber formed between guide bore 28 and the reduced diameter section 22 of the valve.

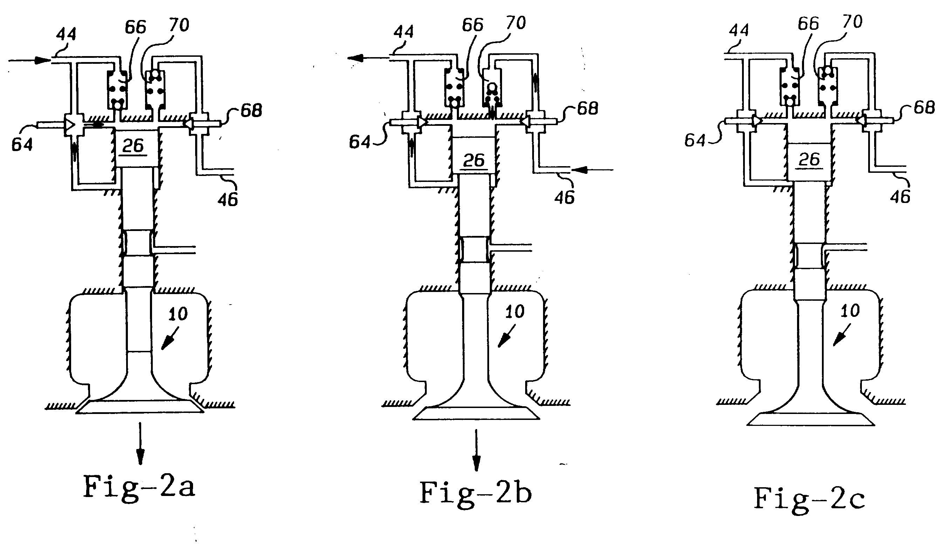

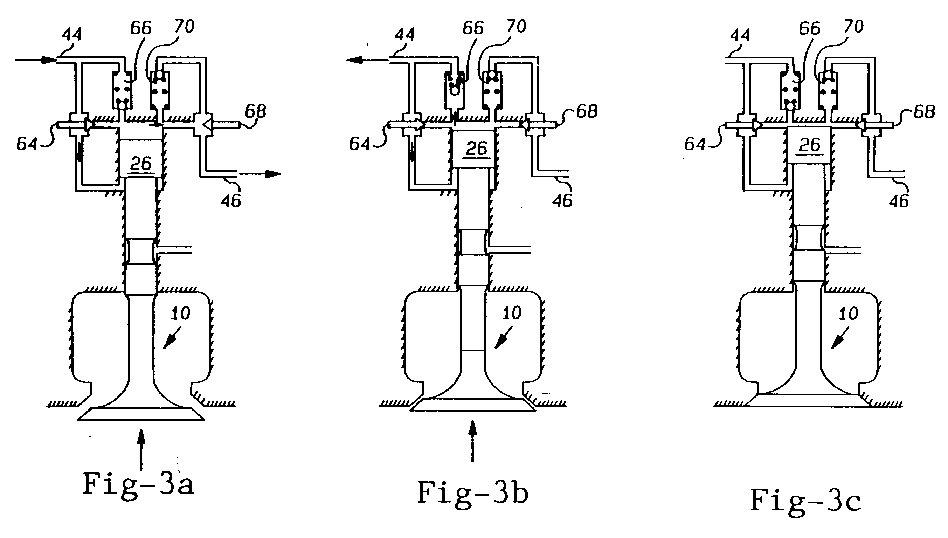

The process of a single valve 10 opening and closing is illustrated in Figures 2a-c and 3a-c. The arrows indicate the direction of fluid flow and valve motion as the case may be.

During the engine valve opening, the solenoid valve 64 opens and the net pressure force acting on the piston 26 accelerates the engine valve downward (Figure 2a). When the solenoid valve 64 closes, pressure above the piston 26 drops, and the piston decelerates pushing the fluid from the volume below it back into the high pressure rail (Figure 2b). Low pressure fluid flowing through the check valve 70 prevents void formation in the volume above the piston 26 during deceleration. When the downward motion of the valve stops, the low pressure check valve 70 closes and the engine valve remains locked in its open position (Figure 2c)

The process of engine valve closing is similar, in principle, to that of the valve opening. The solenoid valve 68 opens, pressure above the piston 26 drops and the net pressure force accelerates the engine valve upward (Figure 3a). Then the solenoid valve 68 closes and the rising pressure above the piston 26 opens the high pressure check valve 66 (Figure 3b). The direction of the net pressure force is reversed, and the engine valve decelerates pushing the fluid from the volume above the piston 26 back into the high pressure rail. When the engine valve exhausts its kinetic energy, the high pressure check valve 66 closes and the engine valve remains locked in its closed position (Figure 3c). A brief reopening of the high pressure solenoid valve 68 assures that the engine valve is firmly pressed against its seat.

Varying the timing of activation of the two solenoid valves varies the timing of the engine valve opening and closing. Valve lift can be controlled by varying the duration of the solenoid voltage pulse. Changing fluid pressure in the high pressure rail permits control of valve acceleration, velocity and travel time. All this permits considerably greater flexibility in engine valve operation control than is possible in conventional cam driven valve trains; flexibility which, in effect, is equivalent to ability to vary the size and the shape of the cam while the engine is running.

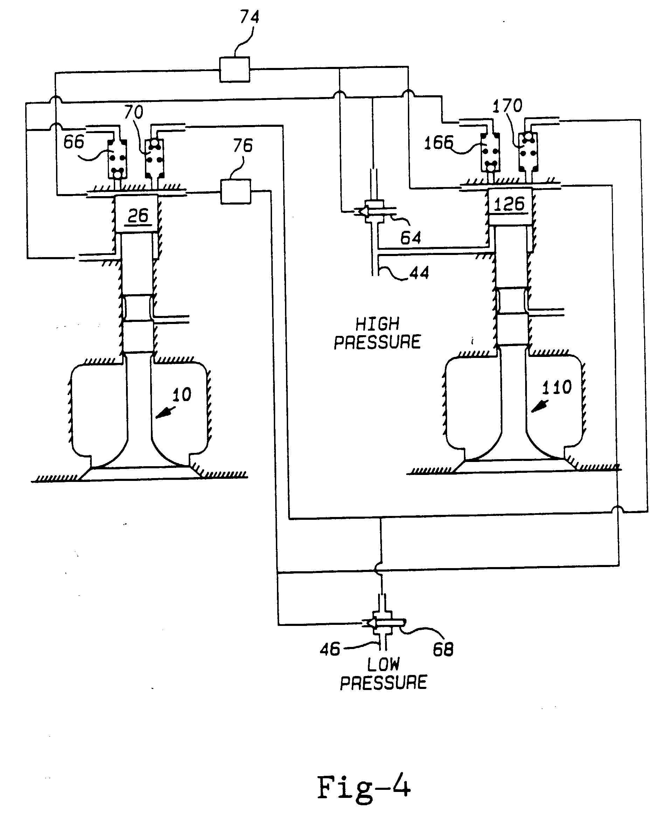

In engines with more than two valves per cylinder, a single pair of solenoid valves can activate several intake (or exhaust) valves simultaneously. This is shown in Figure 4 where the high pressure and low pressure solenoid valves 64 and 68, respectively, activate two engine valves 10 and 110 when the control valves 74 and 76 are open. If the control valves 74 and 76 are closed, only the engine valve 10 is activated. The manner of operation of each engine valve 10,110 is otherwise as described above with reference to Figures 1-3. Like reference numerals are used to illustrate this structural identity except with the second engine valve 110, components identical to the first valve 10 are prefixed in the "100" series.

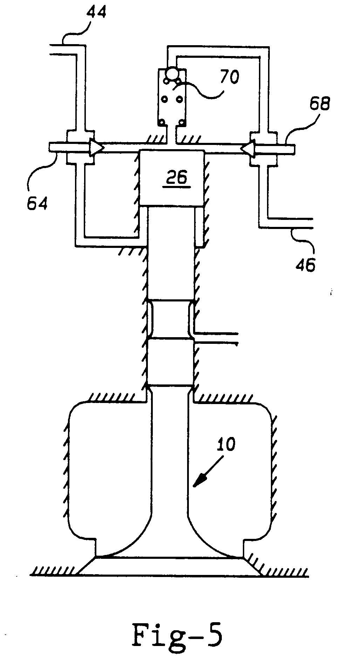

In Figure 5, there is shown another embodiment wherein the high pressure line 44 to the piston 26 includes only a single solenoid valve 70. The high pressure check valve 66 from Figures 1-4 is eliminated. Otherwise, structurally, the system is the same as shown in the embodiments of Figures 1-4.

In operation, solenoid valve 64 is actuated twice during each valve cycle, rather than once as previously described, since its actuation must duplicate the functioning of the eliminated check valve 68. Specifically, during the closing stroke, to effect deceleration of engine valve 10 (Figure 3b of the previous embodiment), the solenoid valve 64 is opened to allow fluid to be pushed back into the high pressure rail. At a point in time when the kinetic energy of the engine valve is calculated to be expended, the solenoid valve 64 is closed and the engine valve remains locked in position.

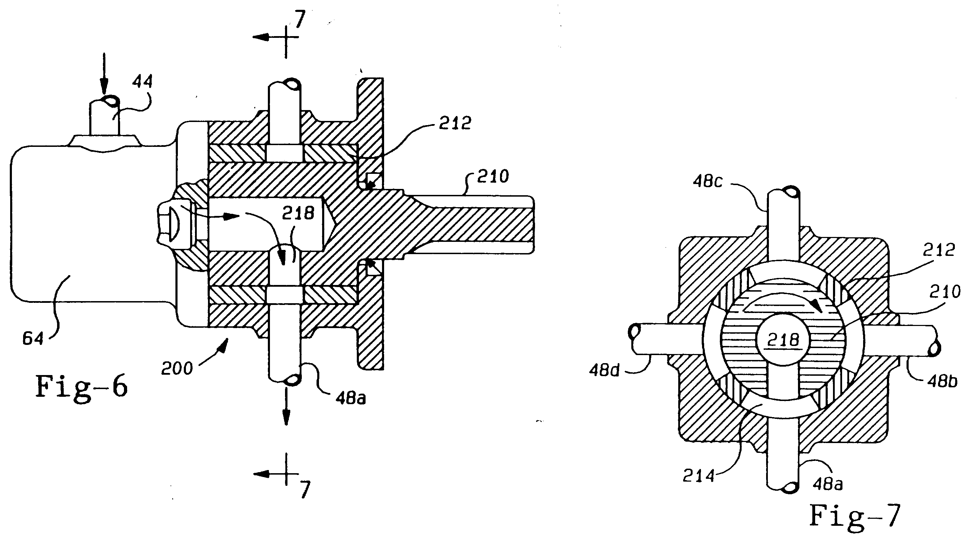

In the arrangements shown in Figures 6-15, there is provided a system whereby the two solenoid valves 64 and 68 control the operation of a group of two or more engine valves. One of the solenoid valves 64 controls the opening motion of the engine valves while the other one 68 is dedicated to control of the closing motion, as previously described. During each cycle of a solenoid valve opening and closing one of the engine valves is brought into motion, in much the same manner previously described in regard to Figures 1-4.

One of the key components of the system is a pair of rotary hydraulic distributors each coupled with a respective solenoid valve 64,68. An example of the rotary hydraulic distributor, generally designated 200, is illustrated in Figures 6 and 7. A normally closed solenoid valve 64 separates the inside of a rotatable distributor sleeve 210 from the source of pressurised fluid, namely for purposes of this discussion, the high pressure rail 40. The distributor sleeve 210 can rotate within an outside stationary sleeve 212, which has several equally radially spaced ports 214 about its circumference, each connected to a separate outlet line 48a-d. The distributor sleeve 210 has a single radial passage 218 which, during each revolution, connects the inside of the distributor sleeve with each of the outlet ports 214 in succession. During engine operation, the distributor sleeve rotates with half the crankshaft speed, and the solenoid valve is opened each time the radial passage 218 is in register with one of the ports 214. The timing and duration of solenoid valve opening may vary within the window of the passage 218 and each port 214 registration.

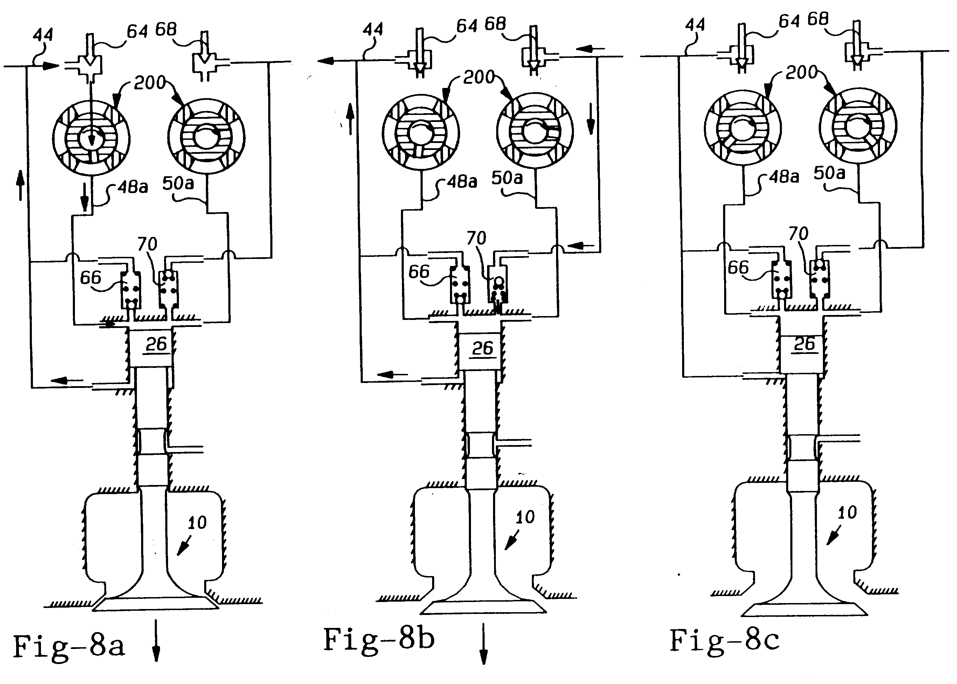

During the valve opening, the high pressure solenoid valve 64 is connected to the engine valve through its rotary distributor. The solenoid valve 64 opens and the net pressure force acting on the piston 26 accelerates the engine valve 10 downward (Figure 8a). When the solenoid valve 64 closes, pressure above the piston 26 drops, and the piston decelerates pushing the fluid from the volume below it back into the high pressure rail (Figure 8b). Low pressure fluid flowing through the check valve 70 prevents void formation in the volume above the piston 26 during deceleration. When the downward motion of the valve stops, the check valve 70 closes and the engine valve remains locked in its open position (Figure 8c). During the opening period, the action at the solenoid valve 68 has no effect on this engine valve, since there is no connection between them through the rotary hydraulic distributor 200 of the solenoid valve 68.

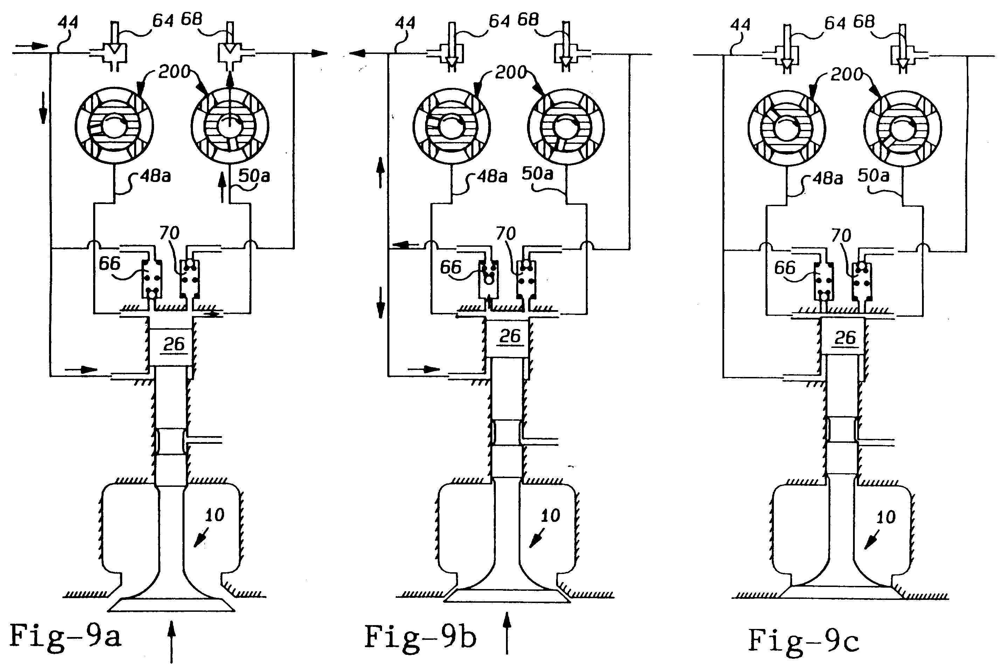

The process of valve closing is similar, in principle, to that of the valve opening. This time, it is the low pressure solenoid valve 68 which is connected to the engine valve through its rotary distributor, while the high pressure solenoid valve 66 is disconnected. The low pressure solenoid valve 68 opens, pressure above the piston 26 drops and the net pressure force accelerates the engine valve upward (Figure 9a). Then the solenoid valve 68 closes and the rising pressure above the piston 26 opens the check valve 66 (Figure 9b). The direction of the net pressure force is reversed, and the engine valve decelerates pushing the fluid from the volume above the piston 26 through line 44 and back into the high pressure rail 40. When the engine valve exhausts its kinetic energy, the check valve 66 closes and the engine valve remains locked in its closed position (Figure 9c). Proper selection of solenoid valve 68 opening duration is, of course, to be determined to assure proper engine valve closing.

As with the previously described embodiment, varying the (i) timing of activation of the two solenoid valves varies the timing of the engine valve opening and closing, (ii) duration of the solenoid voltage pulse controls valve lift, and (iii) fluid pressure in the high pressure rail permits control of valve acceleration, velocity and travel time. Again, the advantage incurred is greater flexibility in engine valve operation control than is possible in conventional cam driven valve trains.

The previous description, which was illustrated in Figures 8a-c and 9a-c was limited to a case of a single valve operation. Figures 10-13 illustrate a case in which a pair of solenoid valves with rotary hydraulic distributors successively operate four valves in four engine cylinders, namely either four intake valves or four exhaust valves. Taken together, Figures 10-13 depict a series of events taking place during a single 720° engine cycle and separate from each other by 90° of rotary distributor angle (180° crankshaft angle). The engine firing order is cylinder nos. 1-3-2-4.

In Figure 10, the high pressure solenoid valve 64 is open and the engine valve No. 1 is accelerated toward opening. The low pressure solenoid valve 68 is open also and engine valve No. 4 accelerates while moving toward its closed position. Only lines in which fluid motion takes place are shown in the drawing.

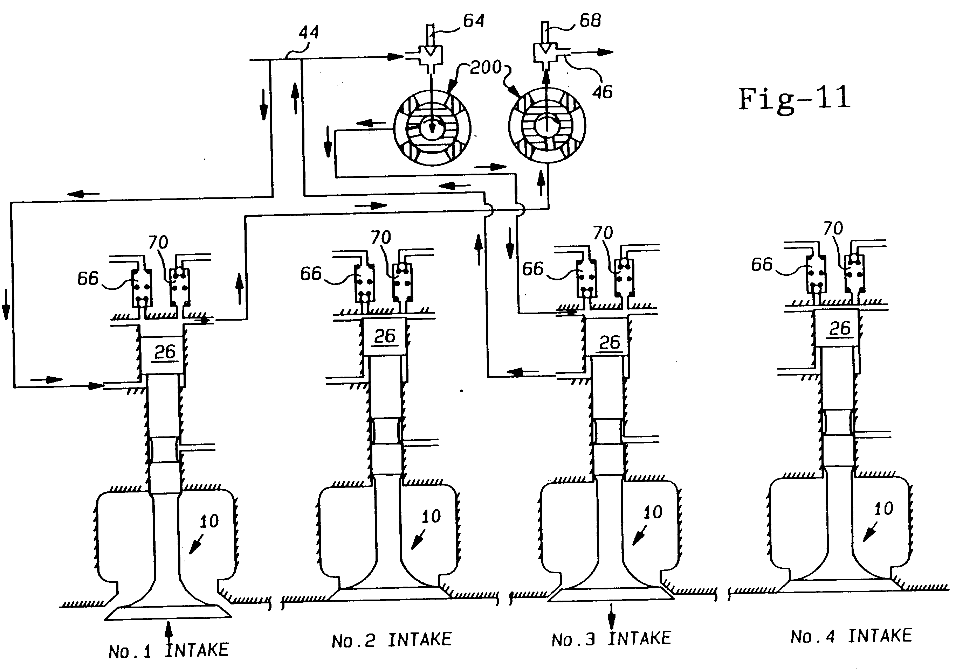

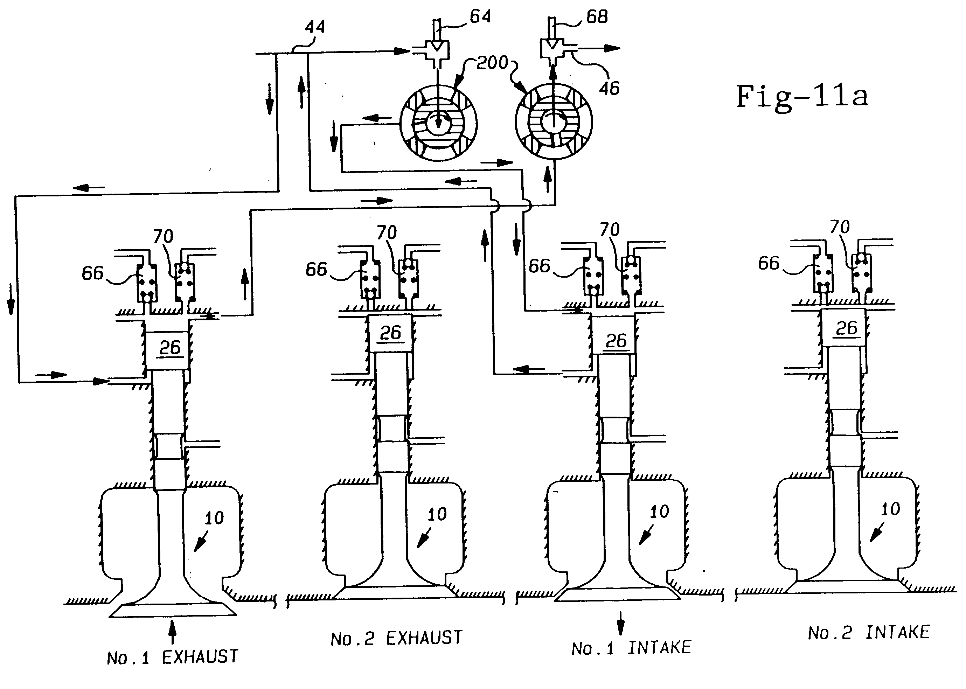

In Figure 11, the solenoid valves 64 and 68 are open again, but, due to new positions of their rotary distributors 200, this time it is valve No. 3 which moves toward opening, while valve No. 1 is closing.

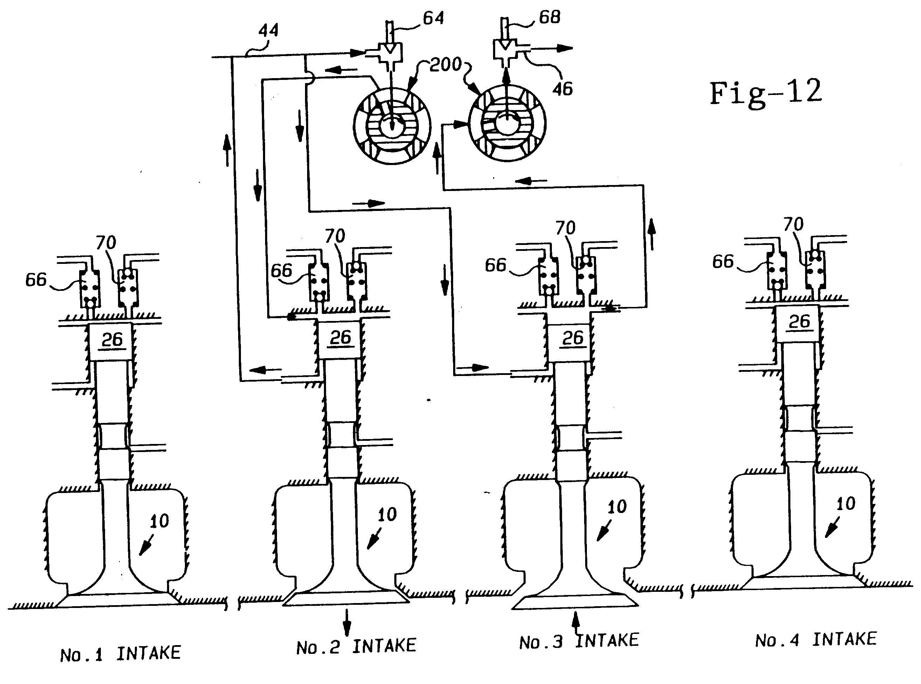

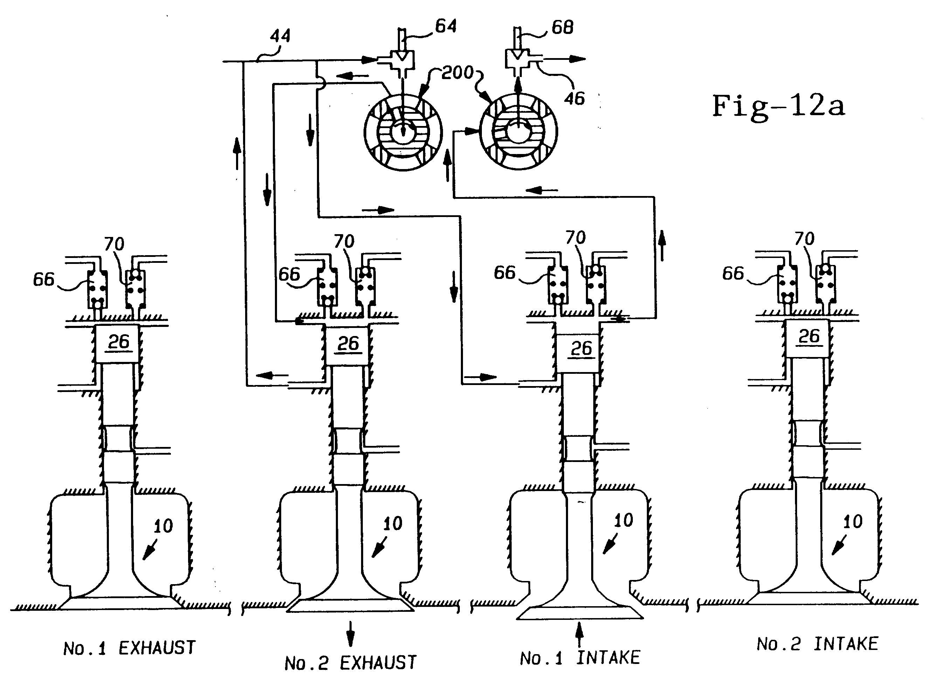

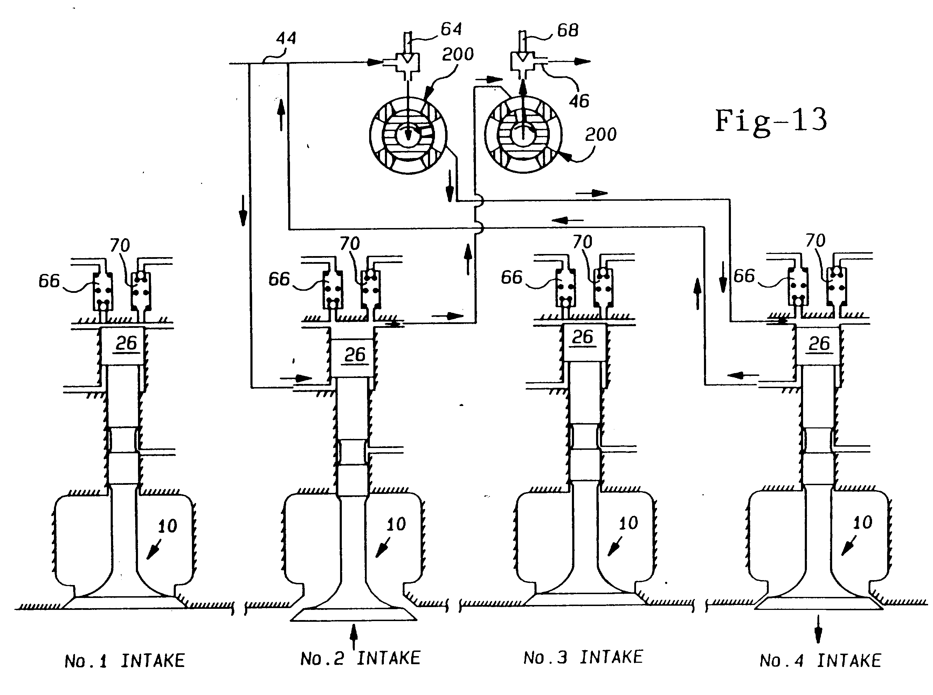

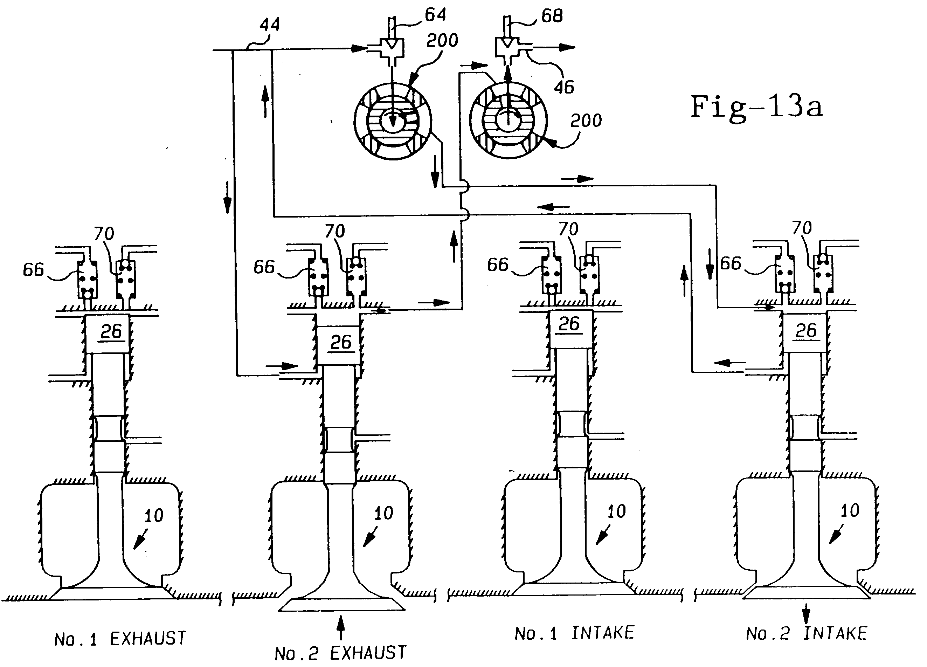

In Figure 12, the position of rotary distributors 200 is such that valve No. 2 is opening while valve No. 3 is closing, and in Figure 13 valve No. 4 is opening while valve No. 2 is closing. After that, the entire sequence is repeated again during each engine cycle.

As mentioned, the engine valves shown in Figures 10-13 could be four intake valves or four exhaust valves in four engine cylinders. However, they could also be one intake and one exhaust valve in one cylinder and another pair of intake and exhaust valves in another cylinder which is 360° crankshaft out of phase with the first one (for example, cylinders No. 1 and 2). In that case, the operational order would be: No. 1 exhaust, No. 1 intake, No. 2 exhaust, No. 2 intake. This is illustrated in Figures 10a-13a. As it was the case in Figures 10-13, the solenoid valves 64 and 68 are open in every case but, in each case, the rotary distributors 200 connect the solenoid valves to a different pair of engine valves. In Figure 10a, the No. 1 exhaust valve accelerates toward the opening and the No. 2 intake valve accelerates toward closing. In Figures 11a, the No. 1 intake valve accelerates toward opening, and the No. 1 exhaust valve accelerates toward closing. In Figure 12a, the No. 2 exhaust valve accelerates toward opening, and the No. 1 intake valve accelerates toward closing. In Figure 13a, the No. 2 intake valve accelerates toward opening, and the No. 2 exhaust valve accelerates toward closing. In a similar manner, the valves in cylinders No. 3 and 4 can be controlled. The operational order would be: No. 4 intake, No. 3 exhaust, No. 3 intake, No. 4 exhaust.

Figure 14 is a schematic diagram of hydraulic connections between the solenoid valves with their rotary hydraulic distributors and the engine valves they control as discussed above and illustrated in Figures 10a-13a. Solenoid valves 64 and 68 control the intake and exhaust engine valves in cylinders No. 1 and No. 2, and another pair of solenoid valves, 64' and 68', identical to valves 64 and 68, control the intake and exhaust engine valves in cylinders No. 3 and No. 4. Figure 15 shows an example of valve lift profiles in the four cylinder engine valve control system depicted in Figure 14.

The system of solenoid valves coupled with rotary hydraulic distributors was described above as applied to a specific concept of variable valve control. It is clear, however, that application of such a system is not limited to any specific concept and can be applied to many other variable valve control systems in which solenoid valves are used to control the engine valves motion.

Valve motion control by means of solenoid type control valves is also used in variable valve systems known as "lost motion" systems. An example of a lost motion valve control system is diagrammatically shown in Figure 16. It is a well known system and as such forms no part of this invention.

A cam 300 drives a cam plunger 302. The motion of the plunger 302 is transmitted through fluid filling a passage 304 to a valve plunger 306 driving the valve 308. Fluid leaking out of the system is replenished from a supply gallery 310 through a check valve 312. As long as the solenoid valve 314 remains closed, the motion of the valve 308 is determined by the profile of the cam 300. Opening the solenoid valve 314 permits some of the fluid to escape from the passage 304 into the supply gallery 310. As a result, motion of the valve 308 becomes different from that dictated by the profile of the cam 300. By varying the solenoid voltage pulse timing and duration, various shapes of the valve lift versus time curve can be obtained.

One of the most important advantages of the variable valve control is the ability to control the amount of air inducted into the engine cylinders by controlling the valve operation rather than by means of throttling the air flow. This permits elimination of a substantial portion of engine throttling losses and improvement in the fuel efficiency. In addition to improved fuel efficiency, skilful application of variable valve control can lead to improvements in combustion stability, maximum power and exhaust emissions. It is important, however, to prevent cylinder-to-cylinder intake air maldistribution. In engines with carburettors or with single point central fuel injection, uneven intake air distribution would lead to unequal power developed by individual cylinders. In engines with multi-point port fuel injection or with direct in-cylinder injection, intake air maldistribution would result in cylinder-to-cylinder variations in air-to-fuel ratios. Such deficiencies can cancel out the benefits of variable valve control.

The amount of air inducted into an engine cylinder is dependent on the engine intake valve lift and opening duration. Therefore, to assure equal air distribution, it is imperative that the valve lift and duration of opening in all cylinders are the same. Since the motion of the valves is controlled by solenoid valves, this amounts to a requirement that all solenoid valves in the system, given the same signal, produce identical results in terms of valve motion.

The accuracy of the cylinder-to-cylinder air distribution is also affected by the accuracy of exhaust valve motion control. Therefore, in variable valve control systems controlling both intake and exhaust valves, similar requirements should be applied to both kinds of valves.

## Claims

1. A hydraulically operated valve control system for an internal combustion engine, said system comprising:
a high pressure source (40) of fluid and a low pressure source (42) of fluid;
a cylinder head member (12) adapted to be affixed to the engine and including an enclosed cavity (30);
a poppet valve (10) movable between a first and second position within said cylinder head member (12);
a hydraulic actuator including a double acting piston (26) coupled to the poppet valve (10) and reciprocable within the enclosed cavity (30), the piston (26) dividing the cavity into two working chambers of differing cross sectional area that vary in volume as the poppet valve (10) moves;
said cylinder head member (12) having a high pressure port (48) extending between the enclosed cavity (30) and the high pressure source of fluid and a low pressure port (50) extending between the enclosed cavity (30) and the low pressure source of fluid;
a high pressure valve (64) and a low pressure valve (68) for respectively regulating the flow of fluid in the high pressure and the low pressure ports;
said high pressure source (40) including a first high pressure fluid line leading to the enclosed cavity at both ends of the piston;
said high pressure valve (64) being located within said first high pressure line and operational to open and close fluid flow to one end of said piston;
the other end of said piston being continuously open to said high pressure fluid source;
a low pressure fluid line (46) leading to the enclosed cavity at said one end of the piston, the low pressure valve (68) being located within said low pressure line and operational to open and close fluid flow to the one end of the piston; and
control means co-operating with the high and low pressure valves (64,68) for selectively coupling the enclosed cavity to the high pressure and low pressure sources (40,42) to oscillate the poppet valve (10) in timed relation to engine operation,
characterised in that
in use high pressure fluid is returned to the high pressure source (40) at the end of both the opening and closing of the poppet valve (10) so that the volume of high pressure fluid passing through the enclosed cavity (30) from the high pressure source (40) to the low pressure source (42) is substantially less that the volume of the cavity swept by the piston (26) during its stroke.

2. A system as claimed in claim 1 wherein the high pressure valve (64) and the low pressure valve (68) are solenoid valves.

3. A system as claimed in claim 1 or 2, wherein a normally closed pressure relief valve (70) is located in the low pressure line intermediate the one end of said piston and the low pressure valve, whereby during the opening and closing of the poppet valve, the potential energy of the fluid from the high and low pressure fluid sources can be utilised to control the acceleration and deceleration of the poppet valve (10) and the kinetic energy of the poppet valve (10) can be utilised to supplement the pressures to be maintained in the high and low pressure sources.

4. A system as claimed in claim 3, wherein said high pressure source (40) is further connected to said one end of the piston by a line that bypasses the high pressure valve (64) and contains a normally close pressure relief valve (66).

5. A system as claimed in claim 4 including a pair of said poppet valves (10,110), each poppet valve (10,110) including one said hydraulic actuator and a respective one said high pressure relief valve (66,166) and one said low pressure relief valve (70,170);
said first high pressure fluid line (44) and said low pressure fluid line (46) each being hydraulically coupled to each said poppet valve and hydraulic actuator;
said control means including a pair of control valves (74,76), one each being hydraulically coupled to a respective first high pressure fluid line and low pressure fluid line intermediate the pair of poppet valves whereby when the control valves (74,76) are open, both poppet valves (10,110) are operational and when the control valves (74,76) are closed, only one poppet valve (10,110) is operational.

6. A system as claimed in claim 4, including a plurality of said poppet valves (10), each poppet valve including one said hydraulic actuator (26) and a respective one said high pressure relief valve (66) and one said low pressure relief valve (70);
said control means including a high pressure fluid distributor means 4 (200) interposed between said high pressure valve (64) and each said first high pressure fluid line (48) leading to each said poppet valve (10) and having a separate outlet part (48a,48b,48c,48d) to each said first high pressure fluid line (48), said high pressure fluid line means being selectively controllable in timed sequence to conduct high pressure fluid to any one of said poppet valves (10) when said high pressure valve (64) is open;
said control means further including a low pressure fluid distributor means (200) interposed between said low pressure valve (68) and each said low pressure fluid line (50) leading to each said poppet valve and having a separate outlet port (50a,50b,50c,50d) to each said low pressure fluid line (50), said low pressure fluid line means being selectively controllable in timed sequence to conduct low pressure fluid to any one of said poppet valves (10) when said low pressure valve is open;
whereby a single high pressure valve and a single low pressure valve can be utilised to control the actuation of a plurality of poppet valves to be sequentially operated.

7. A system as claimed in claim 6, wherein said high pressure distributor means (200) and said low pressure distributor means (200) each comprise:
a rotary distributor valve (200);
the rotary distributor valve comprising a stationary outer sleeve (212) and a rotatable inner distributor sleeve (210) concentrically arranged within and in sliding engagement with said outer sleeve;
said inner distributor sleeve having an inlet port (218) at one end and a drive shaft at the opposite end; and said high and low pressure valves (64,68) being hydraulically coupled to a respective said inlet port to control fluid flow through the rotary distributor valve (200).

## Patentansprüche

1. Ein hydraulisch betriebenes System zur Ventilsteuerung für einen Verbrennungsmotor, dieses System umfassend:
eine Hochdruckfluidumquelle (40) und eine Niederdruckfluidumquelle (42);
ein Zylinderkopfbauglied (12), das zur Befestigung am Motor angepaßt ist und einen eingeschlossenen Hohlraum (30) einschließt;
ein Tellerventil (10), das zwischen einer ersten und einer zweiten Stellung innerhalb dieses Zylinderkopfbaugliedes (12) beweglich ist;
ein hydraulisches Stellglied, das einen doppeltwirkenden Kolben (26) einschließt, der mit dem Tellerventil (10) verbunden ist und sich innerhalb des abgeschlossenen Hohlraumes (30) hin- und herbewegen kann, wobei dieser Kolben (26) den Hohlraum in zwei Arbeitskammern unterschiedlicher Querschnittsfläche unterteilt, deren Volumina sich bei der Bewegung des Tellerventils (10) verändern;
wobei dieses Zylinderkopfbauglied (12) eine Hochdrucköffnung (48) besitzt, die sich zwischen dem abgeschlossenen Hohlraum (30) und der Hochdruckfluidumquelle erstreckt, und eine Niederdrucköffnung (50), die sich zwischen dem abgeschlossenen Hohlraum (30) und der Niederdruckfluidumquelle erstreckt;
ein Hochdruckventil (64) und ein Niederdruckventil (68) zur Regelung des Fluidumstromes in der Hoch- bzw. Niederdrucköffnung;
wobei diese Hochdruckquelle (40) eine erste Hochdruckfluidumleitung einschließt, die zu dem eingeschlossenen Hohlraum an beiden Enden des Kolbens führt;
wobei dieses Hochdruckventil (64) innerhalb dieser ersten Hochdruckleitung liegt und ein Zulassen und Sperren des Fluidumstromes zu einem Ende dieses Kolbens bewirkt;
wobei das andere Ende des Kolbens für diese Hochdruckfluidumquelle stets offen ist;
eine Niederdruckfluidumleitung (46), die zu dem abgeschlossenen Hohlraum an diesem einen Ende des Kolbens führt, wobei das Niederdruckventil (68) innerhalb dieser Niederdruckleitung liegt und das Zulassen und Sperren des Fluidumstromes zum einen Ende dieses Kolbens bewirkt; und
Steuervorrichtungen, die mit den Hoch- und Niederdruckventilen (64, 68) zusammenwirken, um den abgeschlossenen Hohlraum selektiv mit der Hoch- und der Niederdruckquelle (40, 42) zu verbinden, damit das Tellerventil (10) in zeitlicher Abstimmung mit dem Motorbetrieb schwingt,
dadurch gekennzeichnet,
daß während des Betriebs sowohl nach dem Öffnen als auch nach dem Schließen des Tellerventils (10) unter hohem Druck stehendes Fluidum an die Hochdruckquelle (40) zurückgegeben wird, so daß das Volumen des unter hohem Druck stehenden Fluidums, das von der Hochdruckquelle (40) durch den abgeschlossenen Hohlraum (30) zur Niederdruckquelle (42) fließt, wesentlich geringer ist als das Volumen des Hohlraumes, das von dem Kolben (26) während seines Hubes durchquert wird.

2. Ein System nach Anspruch 1, worin das Hochdruckventil (64) und das Niederdruckventil (68) elektromagnetische Ventile sind.

3. Ein System nach Anspruch 1 oder 2, worin ein normalerweise geschlossenes Druckentlastungsventil (70) in der Niederdruckleitung zwischen dem einen Ende dieses Kolbens und dem Niederdruckventil liegt, wodurch während des Öffnens und Schließens des Tellerventils die potentielle Energie des Fluidums aus der Hoch- und der Niederdruckquelle genutzt werden kann, um die Beschleunigung und das Abbremsen des Tellerventils (10) zu steuern, und wodurch die kinetische Energie des Tellerventils (10) genutzt werden kann, um die Druckwerte, die in der Hoch - und Niederdruckquelle aufrechterhalten werden müssen, zu unterstützen.

4. Ein System nach Anspruch 3, worin diese Hochdruckquelle (40) weiterhin über eine Leitung, die das Hochdruckventil (64) umgeht und ein normalerweise geschlossenes Druckentlastungsventil (66) enthält, mit diesem einen Ende des Kolbens verbunden ist.

5. Ein System nach Anspruch 4, das ein Paar dieser Tellerventile (10, 110) umfaßt, wobei jedes dieser Tellerventile (10, 110) eines dieser hydraulischen Stellglieder und ein jeweiliges von diesen Hochdruckentlastungsventilen (66, 166) und eines von diesen Niederdruckentlastungsventilen (70, 170) enthält;
wobei sowohl diese erste Hochdruckfluidumleitung (44) als auch diese Niederdruckfluidumleitung (46) hydraulisch mit dem jeweiligen Tellerventil und dem hydraulischen Stellglied verbunden sind;
wobei diese Steuervorrichtung ein Paar von Steuerventilen (74, 76) enthält, die beide hydraulisch mit einer jeweils ersten Hochdruckfluidumleitung und einer Niederdruckfluidumleitung zwischen dem Tellerventilpaar verbunden sind, wodurch bei offenen Steuerventilen (74, 76) beide Tellerventile (10, 110) in Betrieb sind und bei geschlossenen Steuerventilen (74, 76) nur ein Tellerventil (10, 110) in Betrieb ist.

6. Ein System nach Anspruch 4, das eine Vielzahl dieser Tellerventile (10) umfaßt, wobei jedes Tellerventil ein solches hydraulisches Stellglied (76) und jeweils ein solches Hochdruckentlastungsventil (66) und ein solches Niederdruckentlastungsventil (70) enthält;
wobei diese Kontrollvorrichtung eine Hochdruckfluidumverteilervorrichtung (200) zwischen diesem Hochdruckventil (64) und jeder dieser ersten Hochdruckfluidumleitungen (48) einschließt, die jeweils zu einem dieser Tellerventile (10) führen, und die eine gesonderte Austrittsöffnung (48a, 48b, 48c, 48d) zu jeder dieser ersten Hochdruckfluidumleitungen (48) besitzt, wobei diese Hochdruckfluidumleitungen in zeitlicher Abfolge getrennt steuerbar sind, um unter hohem Druck stehendes Fluidum zu einem beliebigen dieser Tellerventile (10) zu leiten, wenn dieses Hochdruckventil (64) geöffnet ist;
wobei diese Kontrollvorrichtung ferner eine Niederdruckfluidumverteilervorrichtung (200) zwischen diesem Niederdruckventil (68) und jeder dieser Niederdruckfluidumleitungen (50) einschließt, die zu jedem dieser Tellerventile führen, und die eine gesonderte Austrittsöffnung (50a, 50b, 50c, 50d) zu jeder dieser Niederdruckfluidumleitungen (50) besitzt, wobei diese Niederdruckfluidumleitungen in zeitlicher Abfolge getrennt steuerbar sind, um unter niedrigem Druck stehendes Fluidum zu einem beliebigen dieser Tellerventile (10) zu leiten, wenn dieses Niederdruckventil geöffnet ist;
wodurch ein einzelnes Hochdruckventil und ein einzelnes Niederdruckventil dazu verwendet werden können, die Betätigung einer Vielzahl von in Folge zu betreibenden Tellerventilen zu steuern.

7. Ein System nach Anspruch 6, worin diese Hochdruckverteilervorrichtung (200) und diese Niederdruckverteilervorrichtung (200) jeweils umfassen:
ein Rotationsverteilerventil (200);
wobei das Rotationsverteilerventil eine stationäre äußere Muffe (212) und eine drehbare innere Verteilermuffe (210) umfaßt, die innerhalb dieser äußeren Muffe konzentrisch angeordnet ist und darin gleitet;
wobei diese innere Verteilermuffe eine Eintrittsöffnung (218) an einem Ende und eine Antriebswelle am entgegengesetzten Ende besitzt; und wobei diese Hoch - und Niederdruckventile (64, 68) hydraulisch mit dieser jeweiligen Eintrittsöffnung verbunden sind, um den Fluidumstrom durch das Rotationsverteilerventil (200) zu steuern.

## Revendications

1. Système hydraulique de commande de soupape pour un moteur à combustion interne, ledit système comprenant :
une source haute pression (40) de fluide et une source basse pression (42) de fluide,
un élément de culasse (12) conçu pour être fixé au moteur et comprenant une cavité incluse (30),
une soupape à champignon (10) pouvant être déplacée entre une première et une seconde position à l'intérieur dudit élément de culasse (12),
un actionneur hydraulique comprenant un piston à double effet (26) couplé à la soupape à champignon (10) et pouvant aller et venir à l'intérieur de la cavité incluse (30), le piston (26) divisant la cavité en deux chambres de travail de section transversale différente dont le volume varie lorsque la soupape à champignon (10) se déplace,
ledit élément de culasse (12) comportant un orifice haute pression (48) s'étendant entre la cavité incluse (30) et la source haute pression de fluide et un orifice basse pression (50) s'étendant entre la cavité incluse (30) et la source basse pression de fluide,
une vanne haute pression (64) et une vanne basse pression (68) pour réguler respectivement le débit de fluide dans les orifices haute pression et basse pression,
ladite source haute pression (40) comprenant une première ligne de fluide haute pression menant à la cavité incluse aux deux extrémités du piston,
ladite vanne haute pression (64) étant située dans ladite première ligne haute pression et agissant pour ouvrir et fermer le débit de fluide vers une première extrémité dudit piston,
l'autre extrémité dudit piston étant en permanence ouverte à ladite source de fluide haute pression,
une ligne de fluide basse pression (46) menant à la cavité incluse au niveau de ladite première extrémité du piston, la vanne basse pression (68) étant située dans ladite ligne basse pression et agissant pour ouvrir et fermer le débit de fluide jusqu'à la première extrémité du piston, et
des moyens de commande collaborant avec les vannes haute et basse pression (64, 68) pour coupler de façon sélective la cavité incluse aux sources haute pression et basse pression (40, 42) afin de faire aller et venir la soupape à champignon en relation synchronisée avec le fonctionnement du moteur,
caractérisé en ce que
en utilisation, du fluide haute pression est renvoyé à la source haute pression (40) à l'issue aussi bien de l'ouverture que de la fermeture de la soupape à champignon (10), de sorte que le volume de fluide haute pression passant au travers de la cavité incluse (30) depuis la source haute pression (40) jusqu'à la source basse pression (42) est sensiblement inférieur au volume de la cavité balayé par le piston (26) pendant sa course.

2. Système selon la revendication 1, dans lequel la vanne haute pression (64) et la vanne basse pression (68) sont des électrovannes.

3. Système selon la revendication 1 ou 2, dans lequel un clapet anti-retour normalement fermé (70) est situé dans la ligne basse pression entre la première extrémité dudit piston et la vanne basse pression, d'où il résulte que pendant l'ouverture et la fermeture de la soupape à champignon, l'énergie potentielle du fluide provenant des sources de fluide haute et basse pression peut être utilisée pour commander l'accélération et la décélération de la soupape à champignon (10), et l'énergie cinétique de la soupape à champignon (10) peut être utilisée pour compléter les pressions à maintenir dans les sources haute et basse pression.

4. Système selon la revendication 3, dans lequel ladite source haute pression (40) est en outre reliée à ladite première extrémité du piston par une ligne qui contourne la vanne haute pression (64) et comprend un clapet anti-retour normalement fermé (66).

5. Système selon la revendication 4, comprenant une paire desdites soupapes à champignon (10, 110), chaque soupape à champignon (10, 110) comprenant un dit actionneur hydraulique, et un dit clapet anti-retour (66, 166), et un dit clapet anti-retour basse pression (70, 170) respectifs,
ladite première ligne de fluide haute pression (44) et ladite ligne de fluide basse pression (46) étant chacune couplée hydrauliquement à chaque dits soupape à champignon et actionneur hydraulique,
lesdits moyens de commande comprenant une paire de vannes de commande (74, 76), chacune étant couplée hydrauliquement à une première ligne de fluide haute pression et ligne de fluide basse pression respectives entre la paire de soupapes à champignon, d'où il résulte que lorsque les vannes de commande (74, 76) sont ouvertes, les deux soupapes à champignon (10, 110) sont fonctionnelles et que lorsque les vannes de commande (74, 76) sont fermées, une seule soupape à champignon (10, 110) est fonctionnelle.

6. Système selon la revendication 4, comprenant une pluralité desdites soupapes à champignon (10), chaque soupape à champignon comprenant un dit actionneur hydraulique (26), et un dit clapet anti-retour haute pression (66) et un dit clapet anti-retour basse pression (70) respectifs,
lesdits moyens de commande comprenant un moyen de distributeur de fluide haute pression (200) intercalé entre ladite vanne haute pression (64) et chaque dite première ligne de fluide haute pression (48) menant à chaque soupape à champignon (10) et comportant un orifice de sortie séparé (48a, 48b, 48c, 48d) menant à chaque dite première ligne de fluide haute pression (48), lesdits moyens de ligne de fluide haute pression pouvant être commandés de façon sélective en séquence synchronisée pour conduire du fluide haute pression jusqu'à l'une quelconque desdites soupapes à champignon (10) lorsque ladite vanne haute pression (64) est ouverte,
lesdits moyens de commande comprenant en outre un moyen de distributeur de fluide basse pression (200) intercalé entre ladite vanne basse pression (68) et chaque dite ligne de fluide basse pression (50) menant à chaque dite soupape à champignon et comportant un orifice de sortie séparé (50a, 50b, 50c, 50d) menant à chaque dite ligne de fluide basse pression (50), lesdits moyens de ligne de fluide basse pression pouvant être commandés de façon sélective en séquence synchronisée pour conduire du fluide basse pression jusqu'à l'une quelconque desdites soupapes à champignon (10) lorsque ladite vanne basse pression est ouverte,
d'où il résulte que l'on peut utiliser une seule vanne haute pression et une seule vanne basse pression pour commander l'actionnement d'une pluralité de soupapes à champignon devant être mises en fonction de façon séquentielle.

7. Système selon la revendication 6, dans lequel ledit moyen de distributeur haute pression (200) et ledit moyen de distributeur basse pression (200) comprennent chacun :
une vanne à distributeur rotatif (200),
la vanne à distributeur rotatif comprenant un tiroir extérieur stationnaire (212) et un tiroir de distributeur intérieur tournant (210) disposé de façon concentrique dans ledit tiroir extérieur et en contact glissant avec celui-ci,
ledit tiroir intérieur de distributeur comportant un orifice d'admission (218) au niveau d'une première extrémité et un arbre de commande à l'autre extrémité, et lesdites vannes haute et basse pression (64, 68) étant couplées hydrauliquement à un dit orifice d'admission respectif pour commander le débit de fluide au travers de la vanne à distributeur rotatif (200).
